# EUROPEAN PATENT SPECIFICATION

(11) **EP 3 536 600 B1**
(45) Date of publication and mention of the grant of the patent: **07.10.2020**
(21) Application number: 19170982.3
(22) Date of filing: 05.06.2013
(51) Int. Cl.: B63H 1/14, B63H 1/16, B63H 1/26, F04D 3/02, F03B 3/12, F04D 29/38

(54) **UNDERWATER TURBINE**
UNTERWASSERTURBINE
TURBINE SOUS-MARINE

(30) Priority: 06.06.2012 NL 2008948
(43) Date of publication of application: 11.09.2019
(62) Divisional of application: 13733069.2
(73) Proprietor: G.A.M. Manshanden Management B.V., 1671 NG Medemblik (NL)
(72) Inventor: MANSHANDEN, Gerardus Augustinus Maria, 1671 LA MEDEMBLIK (NL)
(74) Representative: Algemeen Octrooi- en Merkenbureau B.V.

(56) References cited:
- EP-A1- 0 527 227
- EP-A1- 1 738 783
- EP-A2- 0 131 326
- EP-A2- 2 295 808
- WO-A2-2010/109169
- CH-A- 394 814
- DE-B- 1 162 195
- FR-A1- 2 927 605
- US-A- 4 838 819
- NIJHUIS POMPEN BV: "Fish-friendly pump 100 percent safe for eels", FISH-FRIENDLY PUMP PISCES FACILIS, 1 February 2010 (2010-02-01), pages 1-2, XP055499789,

## Description

The invention relates to an underwater turbine for use under water, that may comprise fish, intended for placement under water in the sea, such that electricity can be generated by tidal currents.

It is a known fact that underwater turbines are one of the causes of fish mortality. Furthermore, such underwater turbines produce a lot of noise caused by turbulence. WO 2010/109169 A2 discloses a bladeless turbine design for generating energy from tidal motions. However, this bladeless turbine design does not have a screw, but instead deliberately creates vorticity in the water flowing through the turbine to rotate a conduit through which the water flows, leading to a lot of noise.

The object of the invention is to provide an underwater turbine with a screw which is efficient and/or which causes less fish mortality and/or which produces less noise and/or which causes less cavitation.

In order to achieve that object, the underwater turbine according to the invention comprises a screw with a front side and a rear side, wherein water is forced from the front side to the rear side in use and comprising a hub and at least two blades extending from said hub, wherein a tubular housing having a free rear side end is provided around the blades, wherein the blades are substantially helical-shaped, wherein the blades extend from the hub in the direction of the outer circumference and the front side of the screw in a helical shape, wherein the blades taper off to a point in the outer circumference of the screw at the front side resulting in sickle-shaped blades with free ends near the outer circumference at the front side of the screw, the blades extending in a continuous manner from the front side end to the free rear side end of the tubular housing, wherein the effective surface area of the blades increases continuously from the front side toward the place where they are mounted on the hub, so that the fish in the water are mostly guided along the hub without being touched by the blades, the water with the fish leaving the free rear side end of the tubular housing unguided. The screw is symmetrical, such that the front side and the rear side are identical in shape. As a result, the turbine can profit from both directions of flow of tidal currents.

EP 2295808 A2 furthermore discloses a turbine for generating electrical energy by forcing water therethrough with pipes or ducts. EP 0527227 A1 discloses a vertical pump. The publication "Fish-friendly pump 100 percent safe for eels", Fish Friendly Pump Pisces Facilis, 1 February 2010, pages 1-2 also discloses a turbine for generating electrical energy by forcing water therethrough with pipes or ducts. FR 2927605 A1 furthermore discloses a marine propulsion unit for a ship or vessel.

The part of the hub where the blades are mounted on the hub is preferably conical or frustoconical in shape.

The front ends of the blades may extend in front of the end of the hub.

In a first embodiment, the housing is attached to the blades, so that it rotates along with the blades.

In a second embodiment, the housing is stationary and the blades rotate within the housing.

The front side of the housing is preferably frustoconical in shape, with the wide part of the housing being directed toward the front side.

The cross-sectional area of the space through which the water is forced in use preferably decreases between the front side of the blades and the rear side of the blades.

The invention will now be explained with reference to embodiments shown in the figures, in which:
Figure 1 is a perspective view of a turbine with a screw for use under water;
Figure 2 is a front view of the turbine with the screw shown in figure 1;
Figure 3 is a side view of the turbine with the screw shown in figure 1.

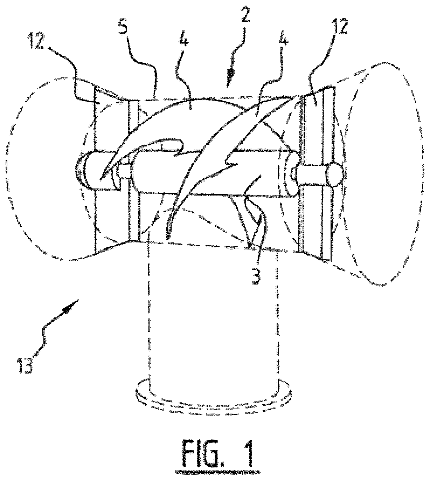

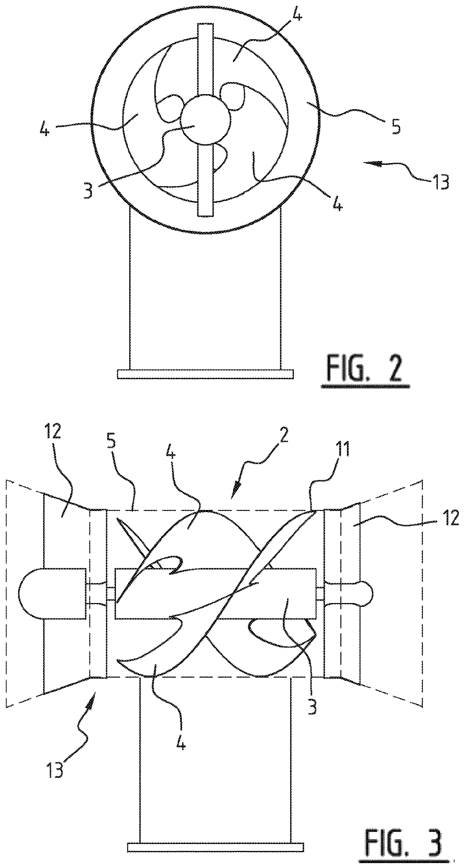

Figures 1, 2 and 3 show a turbine 13 intended for placement under water in the sea, such that electricity can be generated by tidal currents. The screw 2 comprises a hub 3, on which three blades 4 are mounted. The hub 3 with the three blades 4 is mounted in a stationary housing 5, being mounted on bearings, via a shaft 11, in support beams 12 at the front/rear side. The housing 5 tapers off to a trumpet shape at the front/rear side. The screw 2 is symmetrical, such that the front side and the rear side of the screw 2 are identical in shape.

The blades 4 extend from the hub 3 in the direction of the outer circumference and the front side/rear side of the screw 2 in a combined helical/spiral shape. The front side/rear side of the screw 2 is therefore formed by the front sides of the blades 4, which taper off to a point. The effective area of the blades 4 becomes larger and larger in the direction of the plane of symmetry of the screw 2.

## Claims

1. Underwater turbine (13) for use under water, that may comprise fish, intended for placement under water in the sea, such that electricity can be generated by tidal currents, comprising a screw (2), the screw comprising a front side and a rear side, wherein water is forced from the front side to the rear side in use, and comprising a hub (3) and at least two blades (4) extending from said hub (3), wherein a tubular housing (5) having a free rear side end is provided around the blades (4), wherein the blades (4) are substantially helical-shaped, wherein the blades (4) extend from the hub (3) in the direction of the outer circumference and the front side of the screw (2) in a helical shape, wherein the blades (4) taper off to a point in the outer circumference of the screw (2) at the front side resulting in sickle-shaped blades (4) with free ends near the outer circumference at the front side of the screw (2), the blades (4) extending in a continuous manner from the front side end to the free rear side end of the tubular housing (5), wherein the effective surface area of the blades (4) increases continuously from the front side toward the place where they are mounted on the hub, so that the fish in the water are mostly guided along the hub without being touched by the blades, the water with the fish leaving the free rear side end of the tubular housing unguided **characterized in that** the screw (2) is symmetrical, such that the front side and the rear side are identical in shape.

2. Underwater turbine (13) according to claim 1, wherein the part of the hub (3) where the blades (4) are mounted on the hub (3) is conical or frustoconical in shape.

3. Underwater turbine (13) according to claim 1 or 2, wherein the front ends of the blades (4) extend in front of the end of the hub (3).

4. Underwater turbine (13) according to any one of the preceding claims 1 - 3, wherein the housing (5) is attached to the blades (4).

5. Underwater turbine (13) according to any one of the preceding claims 1 - 3, wherein the housing (5) is stationary and the blades (4) rotate within the housing (5).

6. Underwater turbine (13) according to any one of the preceding claims, wherein the front side of the housing (5) is frustoconical in shape, with the wide part of the housing (5) being directed toward the front side.

7. Underwater turbine (13) according to any one of the preceding claims, wherein the cross-sectional area of the space through which the water is forced in use decreases between the front side of the blades (4) and the rear side of the blades (4).

## Patentansprüche

1. Unterwasserturbine (13) zur Verwendung unter Wasser, das Fische enthalten kann, bestimmt für eine Platzierung unter Wasser im Meer derart, dass Elektrizität durch Gezeitenströme erzeugt werden kann, umfassend eine Schraube (2), die Schraube umfassend eine Vorderseite und eine Rückseite, wobei im Einsatz Wasser von der Vorderseite zu der Rückseite gedrückt wird, und umfassend eine Nabe (3) und zumindest zwei Schaufeln (4), die sich von der Nabe (3) erstrecken, wobei ein Rohrgehäuse (5), das ein freies Rückseitenende aufweist, um die Schaufeln (4) bereitgestellt ist, wobei die Schaufeln (4) im Wesentlichen schraubenförmig sind, wobei sich die Schaufeln (4) von der Nabe (3) in der Richtung des Außenumfangs und der Vorderseite der Schraube (2) in einer Schraubenform erstrecken, wobei die Schaufeln (4) zu einem Punkt in dem Außenumfang der Schraube (2) an der Vorderseite auslaufen, was in sichelförmigen Schaufeln (4) mit freien Enden in der Nähe des Außenumfangs an der Vorderseite der Schraube (2) resultiert, wobei sich die Schaufeln (4) auf fortlaufende Weise von dem Vorderseitenende zu dem freien Rückseitenende des Rohrgehäuses (5) erstrecken, wobei der effektive Oberflächenbereich der Schaufeln (4) von der Vorderseite in Richtung der Stelle, an der sie an der Nabe befestigt sind, fortlaufend zunimmt, sodass die Fische in dem Wasser größtenteils entlang der Nabe geführt werden, ohne durch die Schaufeln berührt zu werden, wobei das Wasser mit den Fischen das freie Rückseitenende des Rohrgehäuses ungeführt lässt, **dadurch gekennzeichnet, dass** die Schraube (2) derart symmetrisch ist, dass die Vorderseite und die Rückseite eine identische Form aufweisen.

2. Unterwasserturbine (13) nach Anspruch 1, wobei der Teil der Nabe (3), an dem die Schaufeln (4) an der Nabe (3) befestigt sind, eine konische oder kegelstumpfförmige Form aufweist.

3. Unterwasserturbine (13) nach Anspruch 1 oder 2, wobei sich die Stirnseiten der Schaufeln (4) vor dem Ende der Nabe (3) erstrecken.

4. Unterwasserturbine (13) nach einem der vorhergehenden Ansprüche 1 bis 3, wobei das Gehäuse (5) an den Schaufeln (4) befestigt ist.

5. Unterwasserturbine (13) nach einem der vorhergehenden Ansprüche 1 bis 3, wobei das Gehäuse (5) stationär ist und sich die Schaufeln (4) in dem Gehäuse (5) drehen.

6. Unterwasserturbine (13) nach einem der vorhergehenden Ansprüche, wobei die Vorderseite des Gehäuses (5) eine kegelstumpfförmige Form aufweist, wobei der breitere Teil des Gehäuses (5) in Richtung der Vorderseite gerichtet ist.

7. Unterwasserturbine (13) nach einem der vorhergehenden Ansprüche, wobei die Querschnittsfläche des Raums, durch den das Wasser im Einsatz gedrückt wird, zwischen der Vorderseite der Schaufeln (4) und der Rückseite der Schaufeln (4) abnimmt.

## Revendications

1. Turbine sous-marine (13) pour une utilisation sous l'eau, pouvant comprendre des poissons, destinée à être placée sous l'eau dans la mer, de sorte que l'électricité puisse être générée par des courants de marée, comprenant une hélice (2), l'hélice comprenant un côté avant et un côté arrière, où l'eau est forcée à passer du côté avant au côté arrière lors de l'utilisation, et comprenant un moyeu (3) et au moins deux aubes (4) s'étendant depuis ledit moyeu (3), où un carter tubulaire (5) ayant une extrémité côté arrière libre est prévu autour des aubes (4), où les aubes (4) ont une forme sensiblement hélicoïdale, où les aubes (4) s'étendent à partir du moyeu (3) dans la direction de la circonférence externe et du côté avant de l'hélice (2) sous une forme hélicoïdale, où les aubes (4) se rétrécissant vers un point dans la circonférence externe de l'hélice (2) au côté avant ce qui permet d'obtenir des aubes en forme de faucille (4) avec des extrémités libres à proximité de la circonférence externe au côté avant de l'hélice (2), les aubes (4) s'étendant de manière continue de l'extrémité côté avant à l'extrémité côté arrière libre du carter tubulaire (5), où la superficie efficace des aubes (4) augmente en continu du côté avant vers l'endroit où elles sont montées sur le moyeu, de sorte que les poissons dans l'eau soient principalement guidés le long du moyeu sans être touchés par les aubes, l'eau avec les poissons sortant de l'extrémité côté arrière libre du carter tubulaire sans guidage, **caractérisée en ce que** l'hélice (2) est symétrique, de sorte que le côté avant et le côté arrière soient de forme identique.

2. Turbine sous-marine (13) selon la revendication 1, dans laquelle la partie du moyeu (3) où les aubes (4) sont montées sur le moyeu (3) est de forme conique ou tronconique.

3. Turbine sous-marine (13) selon la revendication 1 ou 2, dans laquelle les extrémités avant des aubes (4) s'étendent devant l'extrémité du moyeu (3).

4. Turbine sous-marine (13) selon l'une quelconque des revendications 1 à 3 précédentes, dans laquelle le carter (5) est fixé aux aubes (4).

5. Turbine sous-marine (13) selon l'une quelconque des revendications précédentes 1 à 3, dans laquelle le carter (5) est fixe et les aubes (4) tournent à l'intérieur du carter (5).

6. Turbine sous-marine (13) selon l'une quelconque des revendications précédentes, dans laquelle le côté avant du carter (5) est de forme tronconique, la partie large du carter (5) étant dirigée vers le côté avant.

7. Turbine sous-marine (13) selon l'une quelconque des revendications précédentes, dans laquelle la surface de section transversale de l'espace à travers lequel l'eau est forcée à passer lors de l'utilisation diminue entre le côté avant des aubes (4) et le côté arrière des aubes (4).
